# FASCICULE DE BREVET EUROPEEN

(11) **EP 0 857 808 B1**
(45) Date de publication et mention de la délivrance du brevet: **21.08.2002**
(21) Numéro de dépôt: 98400027.3
(22) Date de dépôt: 08.01.1998
(51) Int. Cl.: D06F 39/00

(54) **Dispositif économiseur d'eau pour lave-linge et lave-linge équipé d'un tel dispositif**
Vorrichtung zum Sparen von Wasser in einer Waschmaschine und Waschmaschine mit einer solchen Vorrichtung
Device for saving water in a washing machine and washing machine with such a device

(30) Priorité: 10.01.1997 FR 9700200
(43) Date de publication de la demande: 12.08.1998
(73) Titulaire: Electrolux Systèmes de Blanchisserie, 10430 Rosières (FR)
(72) Inventeur: Adler, Michel, 10320 Villery (FR)
(74) Mandataire: Poulin, Gérard

(56) Documents cités:
- EP-A- 0 287 990
- DE-A- 2 910 140

## Description

### Domaine technique

L'invention concerne un dispositif économiseur d'eau conçu pour être incorporé dans un lave-linge ou associé à une telle machine, afin de permettre le recyclage d'une partie de l'eau consommée par cette machine lors de son utilisation.

L'invention concerne également un lave-linge équipé d'un tel dispositif économiseur d'eau.

Le dispositif économiseur d'eau conforme à l'invention peut être utilisé sur tout type de lave-linge et concerne aussi bien les lave-linge à usage domestique que les lave-linge industriels ou semi- industriels tels que ceux qui équipent les collectivités (hôtels, pensions, hôpitaux, restaurants, etc.).

### Etat de la technique

Dans un lave-linge domestique ou industriel, un cycle de lavage comprend généralement une opération de prélavage, une opération de lavage et trois opérations de rinçage. Ce cycle de lavage impose de remplir d'eau la cuve du lave-linge au début de chaque opération, puis d'évacuer de cette eau hors de la cuve.

Dans les machines traditionnelles, l'eau qui est admise dans la cuve de lavage au début de chacune des opérations du cycle de lavage provient du réseau de distribution auquel la machine est raccordée. A la fin de chaque opération, l'eau est évacuée vers l'égout par la vidange de la machine.

Le fonctionnement traditionnel des lave-linge se traduit donc par une consommation élevée d'eau à chaque cycle de lavage.

Pour des raisons économiques et afin de préserver l'environnement, il apparaît de plus en plus souhaitable de diminuer la consommation d'eau dans tous les secteurs. Cet impératif a conduit les concepteurs de lave-linge à réfléchir sur des agencements permettant de recycler une partie de l'eau habituellement évacuée vers l'égout dans les machines traditionnelles.

Dans le cas où le cycle de lavage inclut trois opérations de rinçage, on a imaginé de récupérer l'eau qui est vidangée à la fin des deux dernières opérations de rinçage et dans laquelle aucun produit lessiviel n'a été ajouté. Cette eau est alors envoyée vers trois bacs de récupération de volumes différents. Au cours du cycle de lavage suivant, l'eau contenue dans l'un des bacs est utilisée pour effectuer l'opération de prélavage, l'eau contenue dans un autre bac est utilisée pour effectuer l'opération de lavage et l'eau contenue dans le troisième bac (de plus grand volume) est utilisée pour effectuer la première opération de rinçage.

Cet agencement permet de recycler et, par conséquent, d'économiser près de la moitié de l'eau utilisée au cours d'un cycle de lavage. Toutefois, la distribution vers trois bacs différents de l'eau récupérée au cours des deux derniers cycles de rinçage nécessite l'ajout de distributeurs hydrauliques et de systèmes de commande associés. Cela se traduit par un coût relativement élevé et par un risque de pannes sensiblement plus élevé que sur une machine dépourvue de dispositif économiseur d'eau.

On -connaît du document EP-A-0 287 990 une machine à laver industrielle équipé d'un système de récupération d'eau chaude. Ce système comprend deux réservoirs placés au-dessus du tambour. Un premier réservoir est rempli par une pompe, au travers d'une électrovanne, lors des vidanges qui suivent le premier et le troisième rinçages. Un deuxième réservoir est également rempli par la pompe, au travers d'une électrovanne, lors de la vidange consécutive au deuxième rinçage. La majeure partie du contenu du deuxième réservoir et environ la moitié du contenu du premier réservoir sont utilisés, respectivement, pour le prélavage et le lavage du cycle suivant. Le contenu restant du premier réservoir sert à alimenter la machine pour le premier rinçage.

### Exposé de l'invention

L'invention a précisément pour objet un dispositif économiseur d'eau, de conception particulièrement simple et fiable, conçu pour être monté sur un lave-linge ou associé à une telle machine afin de permettre le recyclage de près de la moitié de l'eau consommée au cours d'un cycle de lavage.

Conformément à l'invention, ce résultat est obtenu au moyen d'un dispositif économiseur d'eau, pour un lave-linge muni d'une cuve de lavage et de moyens de pilotage assurant l'accomplissement d'un cycle de lavage comprenant une opération de prélavage, une opération de lavage et trois opérations de rinçage, ce dispositif comprenant :
- un bac de récupération unique comprenant deux compartiments voisins communiquant entre eux par un trop plein ;
- un conduit de remplissage reliant la cuve de lavage au bac de récupération au travers de moyens de pompage aptes à être actionnés par les moyens de pilotage, au moins lors des deux dernières opérations de rinçage ; et
- trois conduits de soutirage reliant des emplacements différents du bac de récupération à la cuve de lavage, au travers de moyens de soutirage aptes à être actionnés à tour de rôle par les moyens de pilotage, respectivement lors de l'opération de prélavage, lors de l'opération de lavage et lors de la première opération de rinçage ;
dans lequel un premier des conduits de soutirage débouche dans un premier des compartiments, le conduit de remplissage et les deux autres conduits de soutirage débouchant dans le deuxième compartiment, à des niveaux différents.

Un dispositif économiseur d'eau ainsi conçu permet de recycler dans le bac de récupération unique, par un même conduit de remplissage, toute l'eau récupérée lors des opérations de rinçage effectuées sans produit lessiviel, sans qu'il soit nécessaire d'avoir recours à des distributeurs hydrauliques ni aux systèmes de commande électronique qui doivent être associés à de tels distributeurs. Le coût du dispositif économiseur d'eau s'en trouve réduit à une valeur minimale et sa fiabilité accrue.

Dans le dispositif économiseur d'eau selon l'invention, les fractions d'eau soutirées dans le bac de récupération, notamment lors de l'opération de prélavage et lors de l'opération de lavage, sont déterminées par l'ordre d'actionnement des moyens de soutirage et par les emplacements dans lesquels débouchent les conduits de soutirage à l'intérieur du bac de récupération.

Dans une forme de réalisation préférentielle de l'invention, le bac de récupération est placé à un niveau supérieur à celui de la cuve de lavage et les moyens de soutirage sont des électrovannes. Cet agencement permet d'assurer le transfert de l'eau par gravité, du bac de récupération dans la cuve de lavage du lave-linge, à chaque ouverture d'une électrovanne.

De préférence, les deux compartiments du bac de récupération ont sensiblement le même volume.

Dans la forme de réalisation préférentielle de l'invention, le premier conduit de soutirage débouche dans le fond du premier compartiment et un deuxième des conduits de soutirage débouche dans le fond du deuxième compartiment.

Avantageusement, les moyens de soutirage qui équipent respectivement le troisième, le deuxième et le premier des conduits de soutirage sont aptes à être actionnés successivement dans cet ordre par les moyens de pilotage du lave-linge, respectivement lors de l'opération de prélavage, lors de l'opération de lavage et lors de la première opération de rinçage de chaque cycle de lavage.

L'invention a aussi pour objet un lave-linge comprenant un tel dispositif économiseur d'eau.

### Brève description des dessins

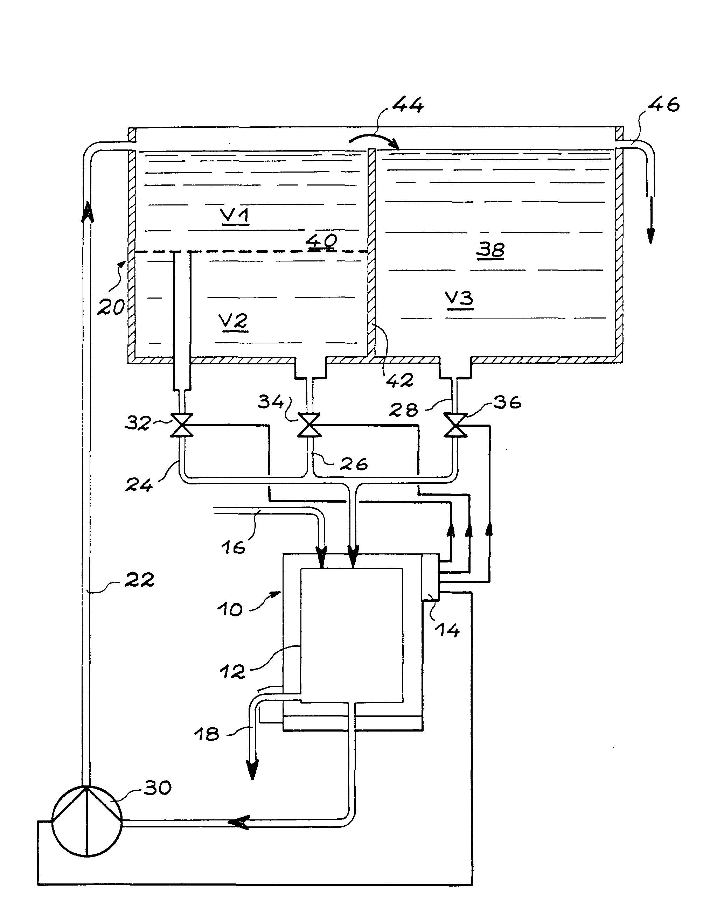

On décrira à présent, à titre d'exemple non limitatif, une forme de réalisation préférentielle de l'invention, en se référant au dessin annexé, dans lequel la figure unique représente schématiquement un lave-linge équipé d'un dispositif économiseur d'eau conforme à l'invention.

### Description détaillée d'une forme de réalisation préférentielle

Sur la figure unique, la référence 10 désigne de façon générale un lave-linge dont la cuve de lavage est illustrée schématiquement en 12.

Le lave-linge 10 est équipé de moyens de pilotage 14 tels qu'un programmateur permettant d'accomplir un cycle de lavage prédéterminé lorsque le lave-linge 10 est en fonctionnement. Le cycle de lavage défini par les moyens de pilotage 14 comprend généralement cinq opérations successives constituées par une opération de prélavage, une opération de lavage et trois opérations de rinçage consécutives. Dans certains cas exceptionnels, seules deux opérations de rinçage sont prévues.

De façon classique, la cuve de lavage 12 du lave-linge 10 est raccordée sur une tuyauterie 16 d'arrivée d'eau et sur une tuyauterie de vidange 18. La tuyauterie 16 d'arrivée d'eau est reliée au réseau d'eau courante et, le cas échéant, à un réseau d'eau chaude extérieur. La tuyauterie de vidange 18 est reliée à un égout.

De façon classique, le lave-linge 10 est également muni de différents compartiments (non représentés) aptes à recevoir des produits lessiviels.

Conformément à l'invention, on ajoute au lave-linge 10 un dispositif économiseur d'eau comprenant principalement, dans la forme de réalisation représentée, un bac de récupération unique 20, un conduit de remplissage unique 22, et trois conduits de soutirage 24, 26 et 28.

De façon plus précise, le bac de récupération 20 est prévu pour être soit intégré au lave-linge 10 lors de sa fabrication, soit ajouté à un lave-linge existant. Dans les deux cas, le bac de récupération 20 est placé à un niveau supérieur à celui de la cuve de lavage 12 du lave-linge 10. A cet effet, le bac de récupération 20 peut notamment être placé immédiatement au-dessus du lave-linge 10 et reposer sur celui-ci.

Le conduit de remplissage 22 relie le fond de la cuve de lavage 12 du lave-linge 10 au bac de récupération 20. Des moyens de pompage 30 sont placés dans le conduit de remplissage 22, de façon à permettre le transvasement de l'eau contenue dans la cuve de lavage 12 du lave-linge vers le bac de récupération 20 à des moments qui seront précisés par la suite. Les moyens de pompage 30 peuvent notamment être constitués par une pompe dont le moteur est protégé électriquement par un contact thermique.

Par ailleurs, chacun des conduits de soutirage 24, 26 et 28 relie un emplacement différent du bac de récupération 20 à la cuve de lavage 12 du lave-linge 10. Un moyen de soutirage 32, 34 et 36, constitué dans ce cas par une électrovanne, est placé dans chacun des conduits de soutirage 24, 26 et 28 respectivement.

Les moyens de pompage 30 ainsi que chacune des électrovannes 32, 34 et 36 sont reliés aux moyens de pilotage 14, de façon à pouvoir être commandés par ces derniers. Lorsqu'elles ne sont pas excitées, les électrovannes 32, 34 et 36 sont normalement fermées.

Dans la forme de réalisation illustrée sur la figure unique, le bac de récupération 20 délimite intérieurement deux compartiments voisins 38 et 40 séparés par une cloison intérieure 42. Dans sa partie haute, la cloison 42 est interrompue pour former un trop-plein 44, par lequel les compartiments 38 et 40 communiquent.

Le conduit de remplissage 22 débouche dans le compartiment 40, de préférence à un niveau légèrement supérieur à celui du trop-plein 44. Par ailleurs, le bac de récupération 20 est muni, par exemple dans le compartiment 38, d'un pressostat de trop-plein 46 monté dans une canalisation raccordée à l'égout. Ce pressostat de trop-plein limite le remplissage du bac à une valeur maximale admissible.

Les volumes des compartiments 38 et 40 délimités à l'intérieur du bac de récupération 20 sont de préférence sensiblement égaux.

Comme l'illustre la figure, le conduit de soutirage 24 débouche dans le compartiment 40 sensiblement à mi-hauteur par rapport au trop-plein 44. Le conduit de soutirage 26 débouche dans le fond du compartiment 40. Enfin, le conduit de soutirage 28 débouche dans le fond du compartiment 38.

Avant la première utilisation du lave-linge 10, le bac de récupération 20 est vide. Il ne peut donc être utilisé qu'après un premier cycle de lavage commandé par les moyens de pilotage 14.

Au cours de ce premier cycle de lavage, une opération de prélavage est exécutée avec de l'eau froide ou de l'eau chaude admise par la canalisation 16. Une quantité déterminée d'un produit lessiviel approprié est ajoutée automatiquement à l'eau de prélevage par les moyens de pilotage 14. A la fin de cette opération de prélavage, l'eau est évacuée vers l'égout par la canalisation de vidange 18.

L'opération de lavage puis la première opération de rinçage sont ensuite exécutées successivement, sensiblement de la même manière.

Lors de la deuxième opération de rinçage, de l'eau froide non additionnée de produit lessiviel est admise dans la cuve de lavage 12 par la canalisation 16. A la fin de cette opération, l'eau est récupérée et recyclée vers le bac de récupération 20 par une première mise en oeuvre des moyens de pompage 30. L'eau récupérée remplit progressivement le compartiment 40 du bac de récupération 20 (les électrovannes 32, 34 et 36 étant toujours fermées).

Lors de la troisième opération de rinçage, de l'eau froide du réseau, non additionnée de produit lessiviel, est à nouveau admise dans la cuve de lavage 12 par la canalisation 16. A la fin du rinçage, l'eau est récupérée et recyclée vers le bac de récupération 20 par une deuxième mise en oeuvre des moyens de pompage 30. L'eau admise dans le compartiment 40 remplit alors progressivement le compartiment 38 par le trop-plein 44, dès que le niveau de celui-ci est atteint. A la fin du dernier rinçage, les deux compartiments 38 et 40 du bac de récupération 20 sont normalement pratiquement pleins.

Dès le cycle de lavage suivant et lors de tous les cycles de lavage ultérieurs, le bac de récupération 20 est utilisé et fournit près de la moitié de l'eau nécessaire à l'accomplissement d'un cycle de lavage complet.

Ainsi, lorsque les moyens de pilotage 14 commandent l'accomplissement de l'opération de prélavage, l'électrovanne 32 placée dans le conduit de soutirage 24 est ouverte et tout le volume d'eau V1, placé dans le compartiment 40 au-dessus de l'embouchure du conduit de soutirage 24, s'écoule par gravité dans la cuve de lavage 12 du lave-linge. Les produits lessiviels appropriés au prélavage sont ajoutés automatiquement à l'eau admise dans la cuve 12, par les moyens de pilotage 14. Lorsque l'opération de prélavage est terminée, l'eau est évacuée vers l'égout par la canalisation de vidange 18.

Lorsque les moyens de pilotage 14 commandent ensuite l'accomplissement de l'opération de lavage, l'électrovanne 32 est refermée et l'électrovanne 34 est à son tour ouverte, de sorte que le volume d'eau restant V2 contenu dans le compartiment 40 se vide à son tour par gravité dans la cuve de lavage 12, par le conduit de soutirage 26. Les produits lessiviels appropriés sont là encore ajoutés à l'eau admise dans la cuve 12 par les moyens de pilotage 14. Lorsque l'opération de lavage est terminée, l'eau est évacuée vers l'égout par la canalisation de vidange 18.

Lorsque les moyens de pilotage 14 commandent l'accomplissement de la première opération de rinçage, l'électrovanne 34 est refermée et l'électrovanne 36 est à son tour ouverte afin d'admettre par gravité dans la cuve 12 du lave-linge, au travers du conduit de soutirage 28, le volume V3 d'eau contenu dans le compartiment 38 du bac de récupération 20. Cette eau est additionnée de produits lessiviels appropriés par les moyens de pilotage 14. Lorsque la première opération de rinçage est terminée, l'eau est évacuée vers l'égout par la canalisation de vidange 18.

Lorsque les moyens de pilotage 14 commandent l'accomplissement de la deuxième opération de rinçage, l'électrovanne 36 est refermée et l'eau froide du réseau est admise dans la cuve de lavage 12 par la canalisation 16. A la fin de cette deuxième opération de rinçage, l'eau est récupérée et recyclée dans le bac de récupération 20 par la pompe 30. La troisième opération de rinçage s'effectue de façon similaire, de telle sorte que, lorsque le cycle de lavage est terminé, les deux compartiments 38 et 40 du bac de récupération 20 sont à nouveau remplis d'eau.

Il est à noter qu'en cas de besoin, les moyens de pilotage 14 peuvent permettre d'assurer l'appoint d'eau dans la cuve de lavage 12, par la canalisation 16, si les volumes d'eau en provenance du bac de récupération 20 sont insuffisants.

Par ailleurs, le bac de récupération 20 peut comporter en variante un seul compartiment, dans lequel les conduits de soutirage 24, 26 et 28 débouchent alors à trois niveaux différents. Selon une autre variante, le bac de récupération comporte trois compartiments adjacents, qui se remplissent par déversement à partir d'un premier d'entre eux, et dans le fond desquels débouchent les trois conduits de soutirage.

Dans une autre forme de réalisation, non représentée, le bac de récupération est placé à côté de la cuve du lave-linge. Au moins une pompe supplémentaire est alors nécessaire, afin d'acheminer l'eau contenue dans le bac jusqu'à la cuve.

Enfin, il est à noter que l'eau utilisée dans la cuve de lavage peut n'être récupérée que lors du dernier rinçage, notamment dans le cas où le cycle de lavage ne comporte que deux opérations de rinçage. L'eau recyclée n'est alors utilisée que lors des opérations de prélavage et de lavage.

## Revendications

1. Dispositif économiseur d'eau, pour un lave-linge (10) muni d'une cuve de lavage (12) et de moyens de pilotage (14) assurant l'accomplissement d'un cycle de lavage comprenant une opération de prélavage, une opération de lavage et trois opérations de rinçage, ce dispositif comprenant :
- un bac de récupération unique (20) comprenant deux compartiments voisins (38,40) communiquant entre eux par un trop plein (44) ;
- un conduit de remplissage (22) reliant la cuve de lavage (12) au bac de récupération (20) au travers de moyens de pompage (30) aptes à être actionnés par les moyens de pilotage (14), au moins lors des dernières opérations de rinçage ; et
- trois conduits de soutirage (24,26,28) reliant des emplacements différents du bac de récupération (20) à la cuve de lavage (12), au travers de moyens de soutirage (32,34,36) aptes à être actionnés à tour de rôle par les moyens de pilotage (14), respectivement lors de l'opération de prélavage, lors de l'opération de lavage et lors de la première opération de rinçage ;
- dans lequel un premier (28) des conduits de soutirage débouchant dans un premier (38) des compartiments, le conduit de remplissage (22) et les deux autres conduits de soutirage (24,26) débouche dans le deuxième compartiment (40), à des niveaux différents.

2. Dispositif selon la revendication 1, dans lequel le bac de récupération (20) est placé à un niveau supérieur à celui de la cuve de lavage (12) et les moyens de soutirage sont des électrovannes (32, 34, 36).

3. Dispositif selon l'une quelconque des revendications précentes, dans lequel les deux compartiments (38,40) ont sensiblement le même volume.

4. Dispositif selon l'une quelconque des revendications précédentes, dans lequel le premier conduit de soutirage (28) débouche dans le fond du premier compartiment (38) et un deuxième (26) des conduits de soutirage débouche dans le fond du deuxième compartiment (40).

5. Dispositif selon la revendication 4, dans lequel les moyens de soutirage (32,34,36) qui équipent respectivement le troisième, le deuxième et le premier (24,26,28) des conduits de soutirage sont aptes à être actionnés successivement dans cet ordre par les moyens de pilotage (14), respectivement lors de l'opération de prélavage, lors de l'opération de lavage et lors de la première opération de rinçage de chaque cycle de lavage.

6. Dispositif selon l'une quelconque des revendications précédentes, dans lequel le bac de récupération (20) est muni d'un pressostat de trop-plein (46).

7. Lave-linge, **caractérisé par le fait qu'**il comprend un dispositif économiseur d'eau selon l'une quelconque des revendications précédentes.

## Patentansprüche

1. Wassersparvorrichtung für eine Waschmaschine (10) mit einer Waschtrommel (12) und Steuermitteln (14) zur Durchführung eines Waschzyklus, der einen Vorwaschgang, einen Waschgang und drei Spülgänge umfaßt, wobei die Vorrichtung aufweist:
- einen einzigen Rückgewinnungs- bzw. Rückspeisebehälter (20) mit zwei benachbarten Fächern (38,40), die untereinander über einen Überlauf (44) in Verbindung stehen,
- eine Auffülleitung (22), welche die Waschtrommel (12) mit dem Rückgewinnungsbehälter (20) über Pumpenmittel (30) verbindet, die von den Steuermitteln (14) mindestens während der letzten Spülgänge betätigt werden können, und
- drei Ablass- bzw. Abzugsleitungen (24,26,28), welche die verschiedenen Stellen des Rückgewinnungsbehälters (20) mit der Waschtrommel (12) über Ablassmittel (32,34,36) verbinden, die ihrerseits jeweils während des Vorwaschgangs, des Hauptwaschgangs und des ersten Spülgangs durch Steuermittel (14) betätigt werden können,
- wobei eine erste (28) der Ablassleitungen in ein erstes (38) der Fächer mündet und die Auffülleitung (22) sowie die beiden anderen Ablassleitungen (24,26) auf verschiedenen Höhen in das zweite Fach (40) einmünden.

2. Vorrichtung nach Anspruch 1, bei der der Rückgewinnungsbehälter (20) auf einem höheren Niveau als die Waschtrommel (12) angeordnet ist und die Ablassmittel Elektroventile (32,34,36) sind.

3. Vorrichtung nach einem der vorangehenden Ansprüche, wobei die beiden Fächer (38,40) im wesentlichen das gleiche Volumen aufweisen.

4. Vorrichtung nach einem der vorangehenden Ansprüche, wobei die erste Ablassleitung (28) am Boden des ersten Faches (38) einmündet, und eine zweite (26) der Ablassleitungen am Boden des zweiten Faches (40) einmündet.

5. Vorrichtung nach Anspruch 4, bei der die Ablassmittel (32,34,36), welche jeweils in der dritten, der zweiten und der ersten der Ablassleitungen (24,26,28) vorgesehen sind, nacheinander in dieser Reihenfolge durch die Steuermittel (14) während des Vorwaschgangs, des Hauptwaschgangs bzw. des ersten Spülgangs jedes Waschzyklus betätigt werden können.

6. Vorrichtung nach einem der vorangehenden Ansprüche, wobei der Rückgewinnungsbehälter (20) mit einem Überlauf-Druckregler (46) versehen ist.

7. Waschmaschine, **dadurch gekennzeichnet, daß** sie eine Wassersparvorrichtung gemäß einem der vorangehenden Ansprüche aufweist.

## Claims

1. Water-saving device for a washing machine (10) fitted with a washing unit (12) and driving means (14) for carrying out a washing cycle comprising a prewashing operation, a washing operation and three rinsing operations, said device comprising:
- a single recovery tank (20) having two neighbouring compartments (38, 40) communicating with one another by an overflow (44),
- a filling pipe (22) linking the washing unit (12) to the recovery tank (20) through pumping means (30) actuatable by the driving means (14), at least during the two last rinsing operations, and
- three extraction pipes (24, 26, 28) linking the different locations of the recovery tank (20) to the washing unit (12), through extraction means (32, 34, 36) which can be actuated in turn by the driving means (14), respectively during the prewashing operation, during the washing operation and during the first rinsing operation,
wherein a first (28) of the extraction pipes issues into a first (38) of the compartments, the filling pipe (22) and the two other extraction pipes (24, 26) issuing into the second compartment (40) and at different levels.

2. Device according to claim 1, wherein the recovery tank (20) is placed at a level which is higher than that of the washing unit (12) and the extraction means are solenoid valves (32, 34, 36).

3. Device according to either of the preceding claims, wherein the two compartments (38, 40) have approximately the same volume.

4. Device according to any one of the preceding claims, wherein the first extraction pipe (28) enters the bottom of the first compartment (38) and a second extraction pipe (26) enters the bottom of the second compartment (40).

5. Device according to claim 4, wherein the extraction means (32, 34, 36) equipping respectively the third, second and first extraction pipes (24, 26, 28) can be activated successively in this order by the driving means (14), respectively during the prewash operation, the washing operation and the first rinsing operation of each washing cycle.

6. Device according to any one of the preceding claims, wherein the recovery tank (20) is fitted with an overflow pressure switch (46).

7. Washing machine, wherein it comprises a water-saving device according to any one of the preceding claims.
